# EUROPÄISCHE PATENTANMELDUNG

(11) **EP 4 249 784 A1**
(43) Veröffentlichungstag der Anmeldung: **27.09.2023**
(21) Anmeldenummer: 23158170.3
(22) Anmeldetag: 23.02.2023
(51) Int. Cl.: F16L 25/12, F16L 25/14, F16L 37/107

(54) **ROHRADAPTER**

(30) Priorität: 21.03.2022 DE 102022106528
(71) Anmelder: Crassus GmbH & Co. KG, 10365 Berlin (DE)
(72) Erfinder: Baier, Lars, 10247 Berlin (DE); Baier, Tom, 13055 Berlin (DE); Herrmann, Jared, 10435 Berlin (DE)
(74) Vertreter: Gulde & Partner

(57) **Zusammenfassung**

Die Erfindung betrifft ein Rohradapter (10) zum Verbinden von zwei Rohrenden, der ein erstes Verbindungselement (12), das mit einem ersten Rohrende eines ersten Rohres und ein zweites Verbindungselement (14), das mit einem zweiten Rohrende eines zweiten Rohres umfasst.

Es ist vorgesehen, dass die Verbindungselemente (12, 14) jeweils einen Verbindungsabschnitt (16, 18) zum Verbinden mit dem jeweiligen Rohrende und jeweils einen Kupplungsabschnitt (20, 22) zum Verbinden der Verbindungselemente (12, 14) untereinander umfasst.

## Beschreibung

Die Erfindung betrifft einen Rohradapter zum Verbinden von zwei Rohrenden, der ein erstes Verbindungselement, das mit einem ersten Rohrende eines ersten Rohres und ein zweites Verbindungselement, das mit einem zweiten Rohrende eines zweiten Rohres verbindbar ist, umfasst.

Rohradapter der gattungsgemäßen Art sind bekannt.

EP 3 689 077 A1 offenbart einen Rohradapter zum Verbinden zweier Rohrenden oder eines Rohrendes an ein Bohrloch. Der Rohradapter umfasst ein Rohr mit einem ersten Rohrabschnitt mit einem ersten Rohrende und mit einem zweiten Rohrabschnitt mit einem zweiten Rohrende. Zwischen erstem Rohrabschnitt und zweitem Rohrabschnitt ist ein Mittelabschnitt vorgesehen. Der Rohradapter ist einteilig ausgebildet.

Bei den bekannten Rohradaptern ist nachteilig, dass diese nicht flexibel in unterschiedlichen Einbausituationen eingesetzt werden können. Durch die einteilige Ausbildung müssen die beiden zu verbindenden Rohrenden einen Mindestabstand aufweisen, um den Rohradapter zu platzieren. Anschließend muss wenigstens eines der Rohre axial verschoben werden.

Insbesondere bei Reparatureinsätzen mit bereits verlegten Rohren sind die bekannten Rohradapter nur nachteilig einsetzbar.

Der Erfindung liegt die Aufgabe zugrunde, einen Rohradapter der gattungsgemäßen Art zu schaffen, der einfach aufgebaut ist und der flexibel in unterschiedlichen Einbausituationen eingesetzt werden kann.

Erfindungsgemäß wird diese Aufgabe durch einen Rohradapter mit den in Anspruch 1 genannten Merkmalen gelöst. Dadurch, dass die Verbindungselemente jeweils einen Verbindungsabschnitt zum Verbinden mit dem jeweiligen Rohrende und jeweils einen Kupplungsabschnitt zum Verbinden der Verbindungselemente untereinander umfassen, ist vorteilhaft möglich, den Rohradapter mindestens zweiteilig auszubilden und erst bauseits zu dem gesamten Rohradapter zu komplettieren. Hierdurch wird insbesondere möglich, Rohradapter beim Verbinden von zwei Rohrenden zweier Rohre einzusetzen, deren Rohrenden einen geringeren Abstand zueinander aufweisen, als die gesamte Baulänge des Rohradapters. Vor Ort können die zumindest beiden Verbindungselemente jeweils mit einem Rohrende eines Rohres verbunden werden und anschließend mit ihren Kupplungsabschnitten untereinander verbunden werden.

In bevorzugter Ausgestaltung der Erfindung ist vorgesehen, dass die Kupplungsabschnitte Kupplungselemente zum kraft- und/oder formschlüssigen Verbinden der Verbindungselemente untereinander aufweisen. Diese Kupplungselemente sind vorzugsweise nach Art eines Bajonettverschlusses ausgebildet. Hierdurch wird in einfacher Weise die Teilmontage jedes der Verbindungselemente möglich, so dass diese dann in einfacher Art und Weise miteinander verbunden werden können.

In weiterer bevorzugter Ausgestaltung der Erfindung ist vorgesehen, dass die Verbindungsabschnitte der Verbindungselemente unterschiedliche Durchmesser zum Verbinden von Rohren mit unterschiedlichen Durchmessern aufweisen. Hierdurch wird in einfacher Weise möglich, eine Verbindungsstelle zwischen zwei Rohren mit unterschiedlichen Durchmessern vor Ort mit dem Rohradapter zu verbinden, in dem die entsprechend passenden Verbindungselemente ausgewählt, eingesetzt und miteinander verbunden werden. Die Kupplungsabschnitte der Verbindungselemente besitzen hierbei in weiterer bevorzugter Ausgestaltung der Erfindung einen identischen Durchmesser, so dass zusätzliche Zwischenelemente zur Anpassung der unterschiedlichen Durchmesser nicht erforderlich sind.

Darüber hinaus ist in bevorzugter Ausgestaltung der Erfindung vorgesehen, dass die Verbindungsabschnitte exzentrisch zu einer Längsachse des jeweiligen Verbindungselementes angeordnet sind. Hierdurch wird in einfacher Weise möglich, zwei Rohrenden von zwei Rohren zu verbinden, die nicht nur beabstandet zueinander sondern in ihren Längsachsen versetzt zueinander angeordnet sind. Entsprechend des Maßes der Exzentrizität zwischen Verbindungsabschnitt und Längsachse des Verbindungselementes kann hierbei auf einen unterschiedlichen Versatz in einfacher Weise reagiert werden.

In weiterer bevorzugter Ausgestaltung der Erfindung ist vorgesehen, dass der Rohradapter wenigstens einen Zwischenring umfasst, der ein erstes Kupplungselement zum Verbinden mit dem ersten Verbindungselement und ein zweites Kupplungselement zum Verbinden mit dem zweiten Kupplungselement aufweist. Hierdurch wird vorteilhaft möglich, durch Einsatz wenigstens eines oder gegebenenfalls mehrerer Zwischenringe auch Rohrenden von zwei Rohren zu verbinden, die einen größeren Abstand zueinander aufweisen. Die Zwischenringe lassen sich in einfacher Weise vor Ort mit den jeweiligen Verbindungselementen verbinden. Die Kupplungselemente der Zwischenringe sind hierbei nach Art eines Bajonettverschlusses ausgebildet.

Darüber hinaus ist in bevorzugter Ausgestaltung der Erfindung vorgesehen, dass das erste Verbindungselemente und das zweite Verbindungselement, zumindest im Bereich der Kupplungsabschnitte, konstruktionsgleich ausgebildet sind. Hierdurch wird in einfacher Weise möglich, die Verbindungselemente so auszubilden, dass nicht unterschiedlich konstruierte Verbindungselemente zum Erzielen eines Rohradapters eingesetzt werden müssen, sondern diese ausschließlich nach Durchmesser der zu verbindenden Rohre und Lage der zu verbindenden Rohre auszuwählen sind. Durch die konstruktionsgleiche Ausbildung, insbesondere der Kupplungsabschnitte, lassen diese sich dann immer in sicherer Weise kraft- oder formschlüssig miteinander verbinden.

In weiterer bevorzugter Ausgestaltung der Erfindung ist vorgesehen, dass die Verbindungsabschnitte der Verbindungselemente durchmesserkleiner sind, als die Durchmesser der Rohrenden der zu verbindenden Rohre. Hierdurch wird möglich, die Verbindungselemente mit ihren Verbindungsabschnitten in die Rohrenden einzuschieben. Somit ist eine besonders einfache Montage ohne zusätzliche Spannelemente oder dergleichen möglich.

Ferner ist in bevorzugter Ausgestaltung der Erfindung vorgesehen, dass die Verbindungsabschnitte wenigstens ein Dichtelement umfassen, das vorzugsweise über den Außenumfang des Verbindungsabschnittes angeordnet ist. Hierdurch wird vorteilhaft möglich, dass eine dichte Verbindung der Rohrenden mittels des erfindungsgemäßen Rohradapters in einfacher Weise möglich wird.

Darüber hinaus ist in weiter bevorzugter Ausgestaltung der Erfindung vorgesehen, dass der Rohradapter wenigstens ein Sicherungselement umfasst, das den Kupplungsabschnitten der Verbindungselemente zugeordnet ist. Hierdurch wird vorteilhaft möglich, dass bei kraft- und/oder formschlüssiger Verbindung der beiden Verbindungselemente, vorzugsweise nach Art eines Bajonettverschlusses, diese Verbindung gegen unbeabsichtigtes Lösen gesichert werden kann. Ohne aktives Entfernen des Sicherungselementes ist somit ein Entkuppeln der Verbindungselemente nicht möglich. Hierdurch wird die durch den Rohradapter realisierte Verbindungsstelle zwischen den Rohrenden der zu verbindenden Rohre gegen zufälliges Öffnen gesichert. Insbesondere bei einem Verbau im Erdreich kann so durch Erdbewegung oder dergleichen eine zufällige Lösung des Rohradapters vermieden werden.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:
- Figur 1: einen Rohradapter in einer schematischen Perspektivansicht und in einer Schnittdarstellung;
- Figur 2: ein Verbindungselement des Rohradapters in einer schematischen Perspektivansicht und einer Schnittdarstellung;
- Figuren 3 und 4: Schnittdarstellungen des Rohradapters in weiteren Ausführungsbeispielen;
- Figur 5 und 12: einen Zwischenring für einen Rohradapter in einer schematischen Perspektivansicht und einer Schnittdarstellung;
- Figuren 6 bis 11: verschiedene Ausführungsvarianten von Verbindungselementen für Rohradapter jeweils in schematischer Perspektivansicht und Schnittdarstellung
- Figur 13: ein Rohradapter mit Verschlusselement.

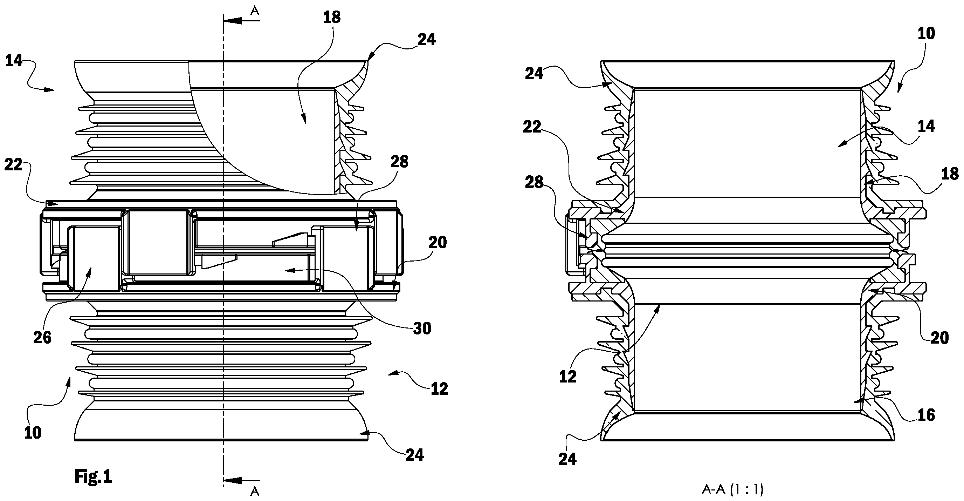

Figur 1 zeigt einen insgesamt mit 10 bezeichneten Rohradapter. Der Rohradapter 10 umfasst ein erstes Verbindungselement 12 und ein zweites Verbindungselement 14. Die Verbindungselemente 12 und 14 bestehen jeweils aus einem Verbindungsabschnitt 16 bzw. 18 und einem Kupplungsabschnitt 20 bzw. 22.

Die Verbindungsabschnitte 16 und 18 sind jeweils von einem Dichtelement 24 in Form einer Dichtmanschette umgeben. Das Dichtelement 24 besteht aus einem elastischen Material und ist auf die Verbindungsabschnitte 16 bzw. 18 aufgeschoben. Außendurchmesser der Verbindungsabschnitte 16 bzw. 18 und Innendurchmesser der Dichtelemente 24 sind hier so aufeinander abgestimmt, dass nach Aufschieben der Dichtelemente 24 auf die Verbindungsabschnitte 16 bzw. 18 diese dort selbstklemmend fixiert sind.

Die Kupplungsabschnitte 20 bzw. 22 umfassen Kupplungselemente 26 bzw. 28. Jedes der Verbindungselemente 12 bzw. 14 besitzt nach dem gezeigten Ausführungsbeispiel vier Kupplungselemente 26 bzw. vier Kupplungselemente 28, die gleichmäßig über den Umfang der Verbindungselemente 12 angeordnet sind. Die Anzahl der Kupplungselemente 26, 28 kann auch weniger oder auch mehr als vier betragen. Die Kupplungselemente 26 des Verbindungselementes 12 sind mit dem Kupplungselement 28 des Verbindungselementes 14 nach Art eines Bajonettverschlusses kraft- und/oder formschlüssig miteinander verbindbar. Durch Relativverdrehung der Verbindungselemente 12 und 14 zueinander erfolgt das Verbinden zu dem kompletten Rohradapter 10.

Auf Aufbau und Wirkungsweise der Kupplungsabschnitte 20 und 22 wird anhand der nachfolgenden Figuren noch näher eingegangen.

Der in Figur 1 dargestellte Rohradapter 10 zeigt folgende Funktion:
Der Rohradapter 10 dient dem Verbinden von zwei Rohrenden zweier Rohre. Die Rohre mit Ihren Rohrenden sind in Figur 1 nicht dargestellt.

Der Rohradapter 10 besteht also zunächst aus den beiden Verbindungselementen 12 und 14 mit jeweils aufgeschobenen Dichtelementen 24.

Das Verbindungselement 12 wird dann zunächst in ein Rohrende eines ersten Rohres eingeschoben, bis eine Stirnseite dieses Rohrendes in Anlagekontakt mit dem Kupplungsabschnitt 20 gelangt.

Je nach Einbausituation der zu verbindenden Rohre wird dann das zweite Verbindungselement 14 in das Rohrende des zweiten Rohres eingeschoben.

Anschließend werden die Kupplungsabschnitte 20 bzw. 22 miteinander in Eingriff gebracht und dann durch Verdrehen - gemäß dem gezeigten Ausführungsbeispiel um 90° - kraft- und/oder formschlüssig miteinander verbunden.

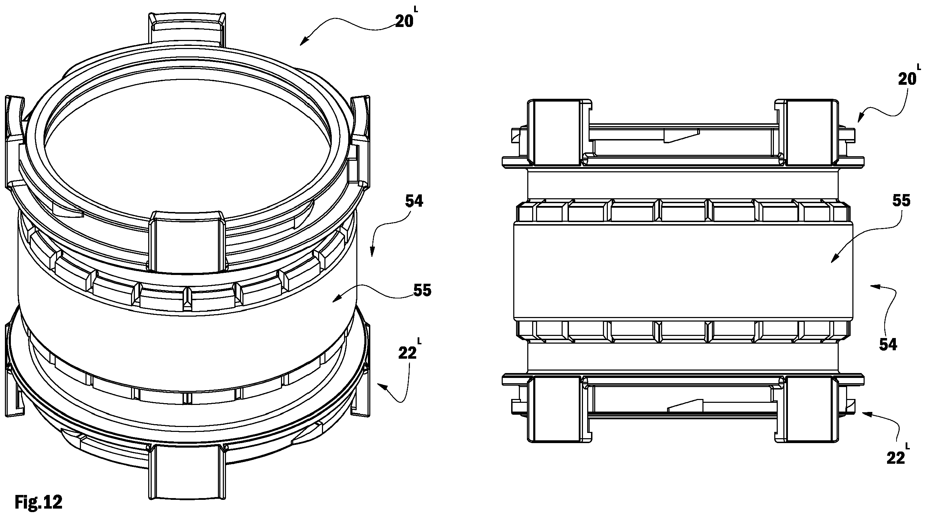

Die Arretierung dieser Verbindung erfolgt dann durch in Figur 12 näher gezeigte Verschlusselemente, die jeweils in den in Figur 1 erkennbaren Freiraum 30 zwischen benachbarten Kupplungselementen 26 bzw. 28 eingebracht, vorzugsweise eingeklipst werden. Hierdurch ist ein Aufdrehen, d. h. Lösen der form- und/oder kraftschlüssigen Verbindung zwischen den Verbindungselementen 12 und 14 nur durch gewolltes Entnehmen der Verschlusselemente aus den Freiräumen 30 möglich.

Der Rohradapter 10 ist somit sehr flexibel einsetzbar. Bei bereits beispielsweise im Erdreich verlegten Rohren, bei denen eine Reparatur einer Verbindungsstelle zwischen zwei benachbarten Rohren erfolgen soll, ist lediglich eine relativ geringe Baufreiheit für das Einbringen der Rohradapter 10 erforderlich.

Bei einer Neuverlegung von Rohren kann der Rohradapter 10 zunächst komplettiert werden und anschließend werden die beiden Rohrenden auf die Dichtelemente 24 aufgesteckt.

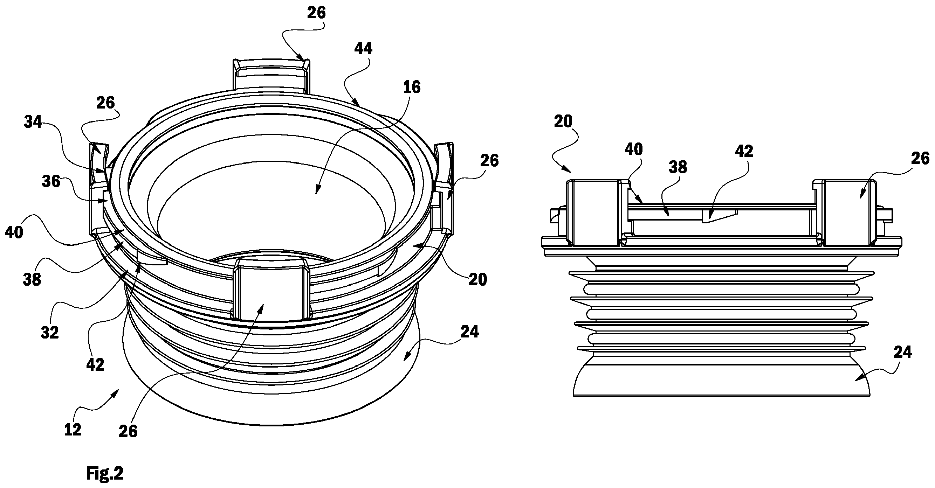

In Figur 2 ist ein einzelnes Verbindungselement 12 dargestellt. Gleiche Teile wie in Figur 1 sind mit gleichen Bezugszeichen versehen und nicht nochmals erläutert.

Anhand der Darstellung in Figur 2 wird der Aufbau des Kupplungsabschnitts 20 verdeutlicht.

Der Kupplungsabschnitt 20 besitzt einen umlaufenden Ringkragen 32 von dem sich die Kupplungselemente 26 axial erstrecken. Es sind vier Kupplungselemente 26 vorgesehen, die gleichmäßig über den Gesamtumfang des Ringkragens 32 angeordnet sind. An ihrem dem Ringkragen 32 abgewandten Seite besitzen die Kupplungselemente 26 eine Schulter 34, die zur Ausbildung eines Freiraumes 36 zwischen der Schulter 34 und dem Ringkragen 32 führt.

Innerhalb dieses Freiraumes 36 ist jedem Kupplungselement 26 ein Führungsabschnitt 38 zugeordnet. Der Führungsabschnitt 38 besitzt eine Führungsfläche 40 und an der Führungsfläche 40 gegenüberliegenden Seite eine Rastnase 42.

Figur 2 verdeutlicht, dass das Verbindungselement 12 an seiner oberen Stirnseite einen Dichtring 44 aufweist.

Die Verbindungselemente 12 und 14 - wie in Figur 1 dargestellt - sind konstruktionsgleich. Das heißt, Verbindungselement 12 und Verbindungselement 14 besitzen exakt den gleichen Aufbau wie in Figur 2 anhand des Verbindungselementes 12 gezeigt.

Für den Zusammenbau der Verbindungselemente 12 und 14 zu dem Rohradapter 10 werden diese mit den einander zugewandten Kupplungsabschnitten 20 und 22 zunächst ineinandergesteckt. Hierbei gelangen die Kupplungselemente 26 zunächst axial in den Bereich, der zwischen dem Führungselement 38 und dem benachbarten Kupplungselement 26 frei bleibt. Die jeweiligen Führungsflächen 40 gelangen hierbei in Anlagekontakt. Durch anschließendes Verdrehen der Verbindungselemente 12 und 14 zueinander gelangen die Führungselemente 38 zunächst in die jeweiligen Freiräume 36 des jeweils zugeordneten Kupplungselements 26 des anderen Verbindungselementes. Das Verdrehen erfolgt so weit, bis die Kupplungselemente 26 bzw. 28 der beiden Verbindungselemente 12 und 14 aneinanderliegen. In dieser Position haben die Führungselemente 38 die jeweiligen Freiräume 36 vollständig durchdrungen und hintergreifen die zugeordneten Kupplungselemente 26 des anderen Verbindungselementes mit ihren Rastnasen 42.

Der Dichtring 44 oder ggfls. die Dichtringe 44 gewährleisten hierbei eine dichte Verbindung der beiden Verbindungselemente 12 und 14 miteinander.

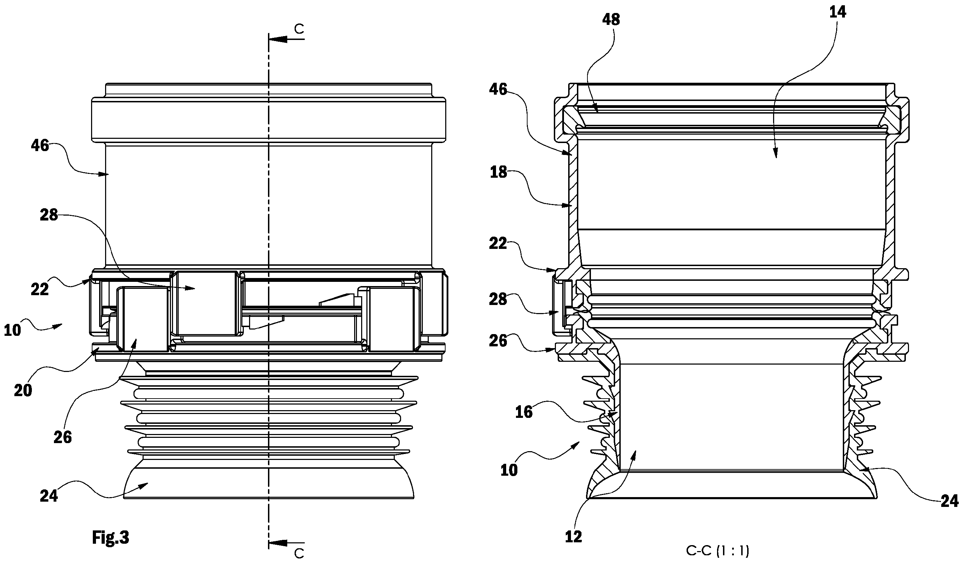

Figur 3 zeigt einen Rohradapter 10 in einer abgewandelten Ausführungsform.

Das Verbindungselement 12 zeigt den bereits anhand der vorhergehenden Figuren erläuterten Aufbau.

Das Verbindungselement 14 ist hier als Muffe 46 ausgebildet. Das bedeutet, der Verbindungsabschnitt 18 des Verbindungselementes 14 wird nicht in ein zweites Rohrende eines zweiten Rohres eingesteckt, sondern umgreift dieses von außen. Die Muffe 46 ist hierbei mit einem innenliegenden Dichtelement 48 versehen. Der Kupplungsabschnitt 22 der Muffe 46 ist wiederum identisch ausgebildet, wie bereits anhand der vorliegenden Figuren erläutert.

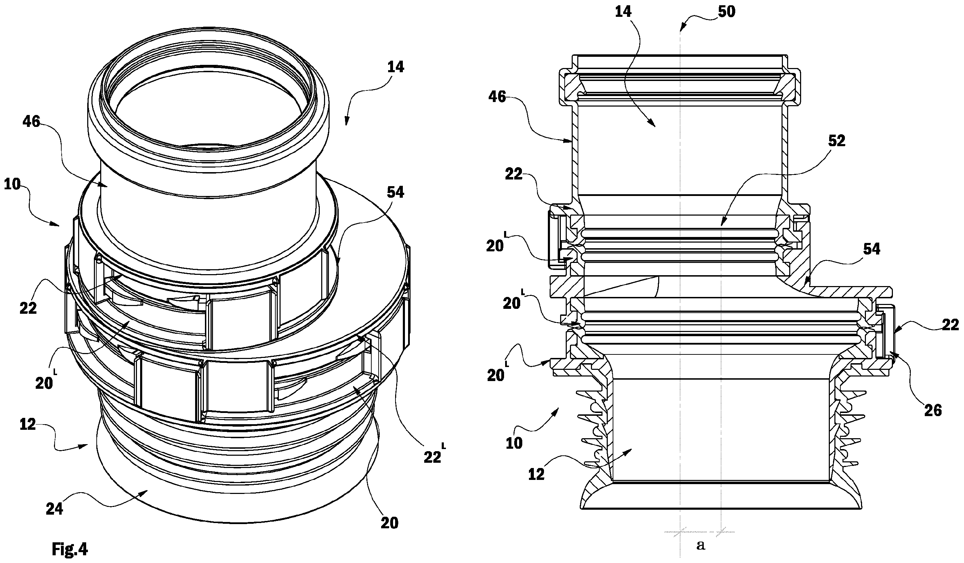

Figur 4 zeigt eine weitere Ausführungsvariante eines Rohradapters 10. Das Verbindungselement 12 besitzt den anhand von Figur 2 erläuterten Aufbau.

Das Verbindungselement 14 ist wiederum als Muffe 46 ausgebildet.

In dem in Figur 4 gezeigten Ausführungsbeispiel ist das Verbindungselement 14 durchmesserkleiner als das Verbindungselement 12. Dies bedeutet, mit der in Figur 4 gezeigten Ausführungsvariante des Rohradapters 10 können Rohre mit unterschiedlichen Nennweiten miteinander verbunden werden.

Wie Figur 4 weiter verdeutlicht, ist eine Längsachse 50 des Verbindungselementes 14 exzentrisch zu einer Längsachse 52 des Verbindungselementes 12 angeordnet.

Durch den sich hierdurch ergebenden Abstand a zwischen den Längsachsen 50 und 52 wird es möglich, mittels des Rohradapters 10 Rohre zu verbinden, die nicht nur einen Abstand zueinander aufweisen, sondern auch einen lateralen Versatz besitzen.

Der in Figur 4 gezeigte Rohradapter 10 besitzt ferner einen Zwischenring 54. Der Zwischenring 54 besitzt einen Kupplungsabschnitt 22` der komplementär zu dem Kupplungsabschnitt 20 des Verbindungselementes 12 ausgebildet ist. Ferner besitzt der Zwischenring 54 einen Kupplungsabschnitt 20` der komplementär zu dem Kupplungsabschnitt 22 des Verbindungselementes 14 ausgebildet ist.

Aufbau und Wirkungsweise der Kupplungsabschnitte 20` bzw. 22` entsprechen den bereits anhand von Figur 2 näher erläuterten Aufbau.

Der Zwischenring 54 zeigt in dem in Figur 4 gezeigten Ausführungsbeispiel folgende zwei Funktionen.

Zunächst dient der Zwischenring 54 der Reduzierung des Durchmessers des Verbindungselementes 12 auf den Durchmesser des Verbindungselementes 14. Ferner wird die gesamte Baulänge des Rohradapters 10 durch den Zwischenring 54 entsprechend seiner Längenausdehnung vergrößert. Hierdurch lassen sich mittels des Rohradapters 10 in einfacher und vorteilhafter Weise auch Rohrenden miteinander verbinden, die unterschiedliche Abstände zueinander aufweisen.

Je nach vorgefundenem Abstand können hier entweder Zwischenringe 54 mit unterschiedlichen Längen oder auch mehrere Zwischenringe in der gezeigten Art und Weise miteinander verbunden werden.

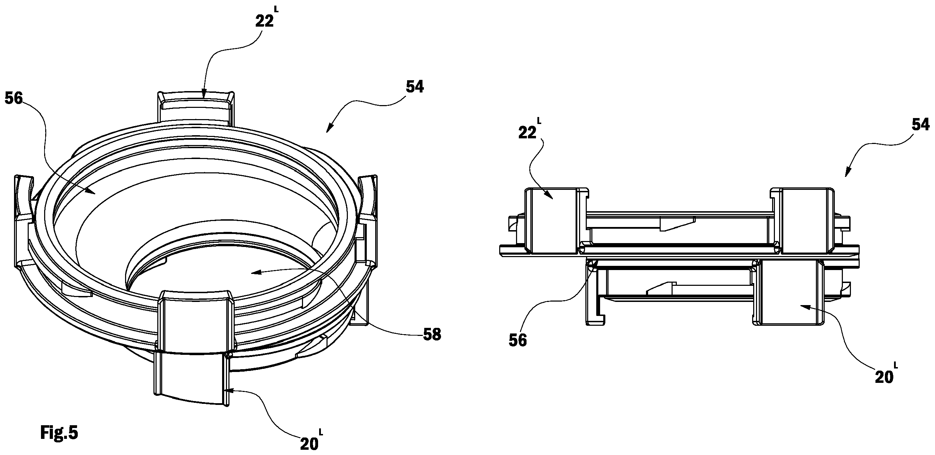

Figur 5 zeigt einen Zwischenring 54 in einer schematischen Perspektivansicht und in einer Schnittdarstellung. In Figur 5 wird deutlich wie der Zwischenring 54 eine Reduzierung der Nenndurchmesser von dem Verbindungselement 12 zu dem Verbindungselement 14 ermöglicht. Der Zwischenring 54 besitzt hierzu eine Verbindungsebene 56 von der ausgehend sich einerseits der Kupplungsabschnitt 22` und andererseits der Kupplungsabschnitt 20` erstrecken. Die Verbindungsebene 56 besitzt eine Durchgangsöffnung 58, über die die Reduktion des Nenndurchmessers erfolgt.

In der Figur 5 wird deutlich, dass der Kupplungsabschnitt 20' exzentrisch zum Kupplungsabschnitt 22` angeordnet ist.

In weiteren, nicht dargestellten, Ausführungsbeispielen kann der Verbindungsabschnitt 20` auch koaxial zu dem Verbindungsabschnitt 22` ausgerichtet sein.

Ferner ist nach weiteren nicht dargestellten Ausführungen möglich, dass die Verbindungsebene 56 durch einen rohrförmigen Abschnitt gebildet ist, so dass Zwischenringe 54 mit unterschiedlicher Baulänge eingesetzt werden können.

Darüber hinaus ist möglich, dass der Zwischenring 54 keine Reduktion des Nenndurchmessers beinhaltet, sondern Kupplungsabschnitt 20` und Kupplungsabschnitt 22` gleich groß ausgebildet sind. In diesem Fall kann der Zwischenring 54, beispielsweise in der in Figur 1 gezeigten Ausführungsvariante, als Verlängerung des Rohradapters 10 eingesetzt werden. Ein derartiger Zwischenring 54 ist beispielhaft in Figur 12 gezeigt. Der Mittelbereich 55 des Zwischenrings 54 kann unterschiedliche Baulängen aufweisen. Dieser Mittelbereich bietet auch die Möglichkeit, dort weitere Elemente, wie beispielsweise ein Brandschutzeinsatzelement, welches im Brandfall in der Lage ist, den Rohrabschnitt abzuschotten, vorzusehen. Auch ist möglich, den Mittelbereich 55 zumindest teilweise transparent auszubilden. Dies ermöglicht eine Sichtkontrolle. In einer weiteren Variante kann der Mittelbereich 55 teleskopierbar sein, das heißt, es sind unterschiedliche Baulängen in einfacher Weise realisierbar. Schließlich kann der Mittelbereich 55 auch eine verschließbare Reinigungsöffnung für einen Zugang in das Rohrinnere aufweisen.

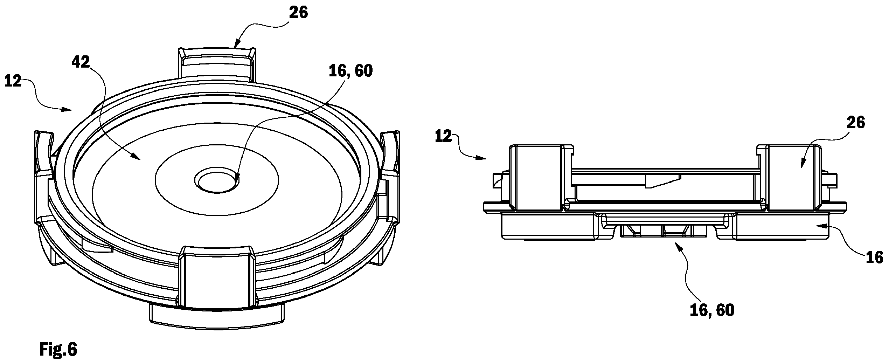

Die Figuren 6 bis 11 zeigen verschiedene Ausführungsvarianten von Verbindungselementen 12, jeweils in einer schematischen Perspektivansicht und einer Schnittdarstellung.

Gemäß Figur 6 ist das Verbindungselement 12 als Abschlusselement ausgebildet. Dies bedeutet, das Verbindungselement 12 wird, wie beispielsweise in Figur 1 gezeigt, mit einem Verbindungselement 14 zu einem Rohradapter 10 komplettiert. Der Verbindungsabschnitt 16 ist hier von einem Innengewinde 60 innerhalb einer Abschlussplatte 62 gebildet. Hierdurch wird möglich, an das Verbindungselement 12 des Rohradapters 10 von außen an den Rohradapter 10 ein ein entsprechendes komplementiertes Außengewinde aufweisendes weiteres Element, entweder ein Rohr, Wasserhahn oder dergleichen anzuschließen.

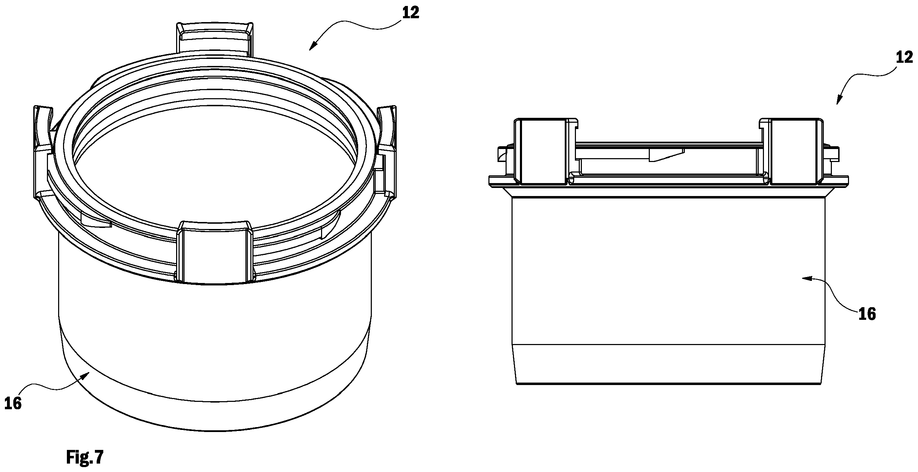

In den Figuren 7 bis 10 sind weitere unterschiedliche Ausführungsformen eines Verbindungselementes 12 gezeigt.

Gleiche Teile wie in den vorherigen Figuren sind mit gleichen Bezugszeichen versehen und nicht nochmals erläutert.

Es wird deutlich, dass die Verbindungselemente 12, aber auch die Verbindungselemente 14 vielfältig ausgebildet sein können. Figur 7 zeigt eine Variante, bei der der Verbindungsabschnitt 16 als Spitzende ausgebildet ist.

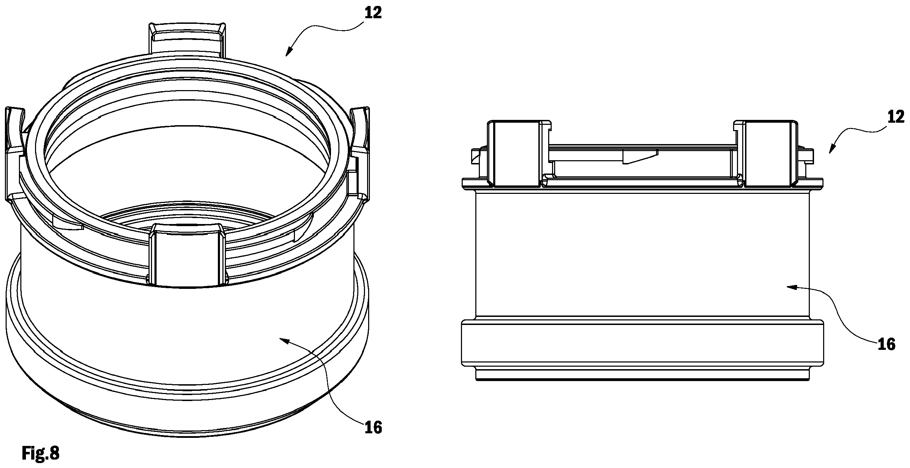

Figur 8 zeigt eine Variante, bei der der Verbindungsabschnitt 16 als Muffe ausgebildet ist.

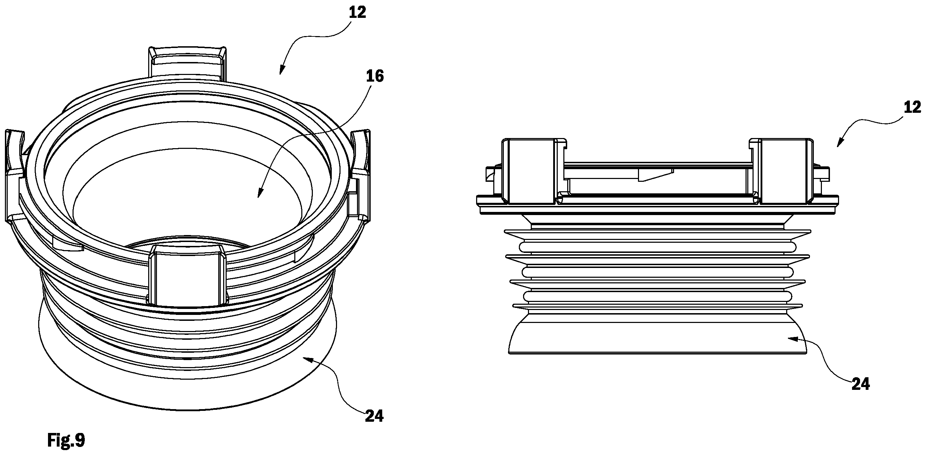

Figur 9 zeigt eine Variante, bei der der Verbindungsabschnitt 16 mit einer Dichtmanschette (Dichtelement 24) umgeben ist.

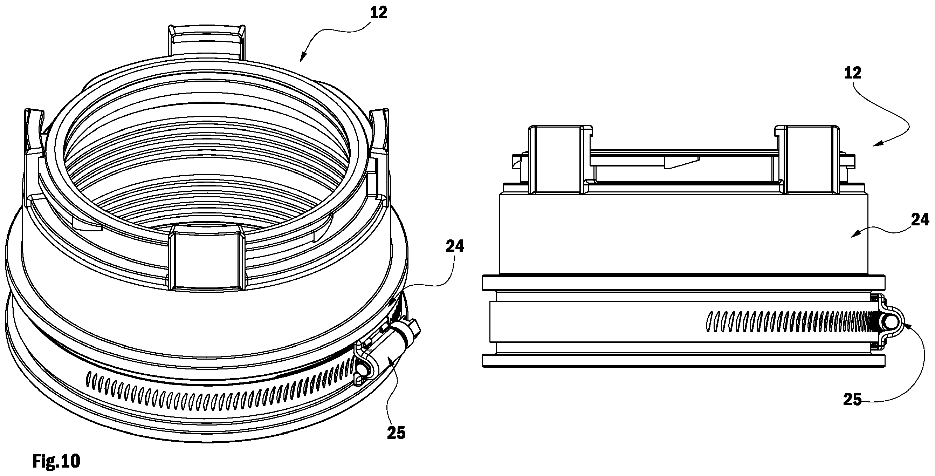

Figur 10 zeigt eine Variante, bei der das Verbindungselement 12 eine als Muffe ausgebildete Dichtmanschette aufweist. Das heißt, der Verbindungsabschnitt 16 wird selber durch die Dichtmanschette (Dichtelement 24) gebildet. Hierbei ist ein zusätzliches Spannband 25 vorgesehen, das eine sichere Verbindung der Dichtmanschette mit dem Rohrende ermöglicht.

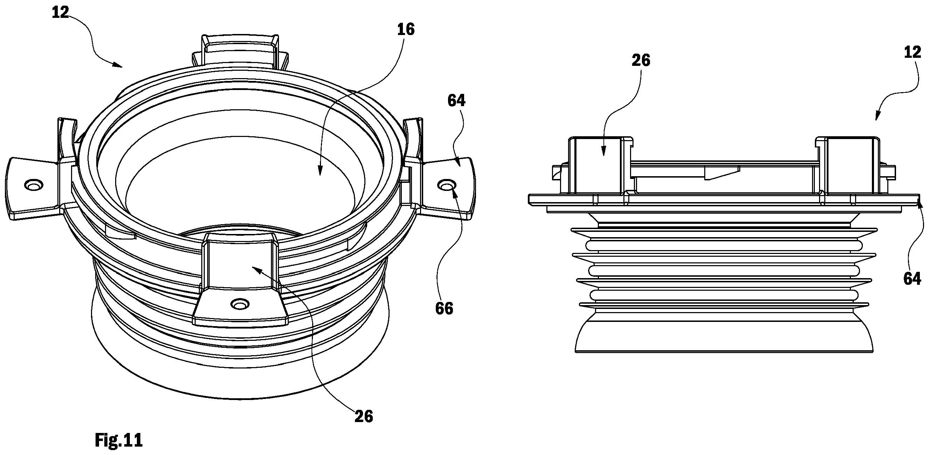

Figur 11 zeigt eine Ausführungsvariante bei der die Kupplungselemente 26 zusätzlich radial abkragende Befestigungslaschen 64 aufweisen. Diese besitzen eine Durchgangsöffnung 66. Diese Ausgestaltung des Verbindungselementes 12 ermöglicht ein Bohrloch einer monolithischen Wand mit dem Verbindungselement 12 auszustatten. Über Befestigungsmittel, beispielsweise Schrauben, wird das Verbindungselement 12 mit der Wand verschraubt. An den Kupplungselementen 26 wird dann - in bereits beschriebener Weise - ein weiteres Verbindungselement 14 befestigt, das mit einem Rohrende eines Rohres in Verbindung steht.

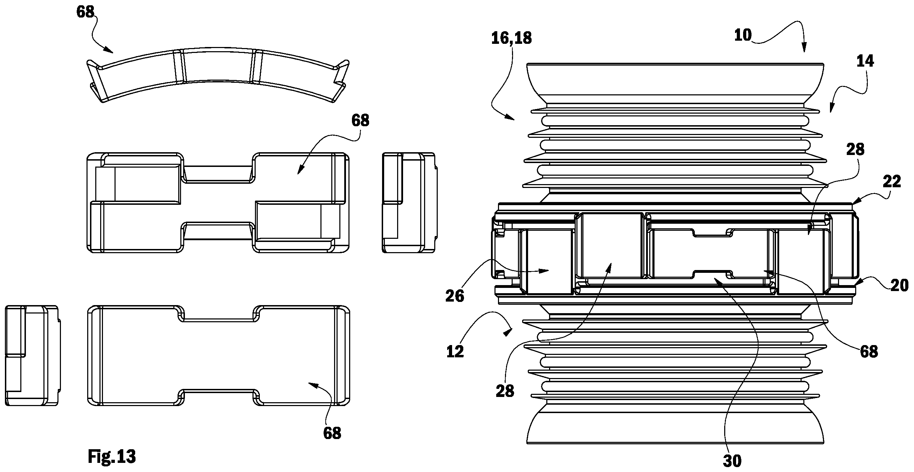

In Figur 13 ist nochmals ein kompletter Rohradapter 10, gemäß dem bereits anhand Figur 1 erläuterten Aufbau, gezeigt. Es wird deutlich, dass in die Freiräume 30 ein Verschlusselement 68 jeweils eingebracht, insbesondere eingeklipst ist. Hierdurch werden die Kupplungselemente 26 bzw. 28 daran gehindert, von ihrer in Figur 13 gezeigten Schließstellung unbeabsichtigt in eine geöffnete, ggfls. nur teilweise geöffnete Stellung zu gelangen. Erst nach Entfemen der Verschlusselemente 68 ist ein Aufdrehen des Rohradapters 10 möglich.

Die anhand der vorhergehenden Figuren erläuterten, verschiedenen Varianten der Verbindungselemente 12 bzw. 14 sind je nach vorgefundener oder gewünschter Einbausituation der zu verbindenden Rohre bzw. des zu verbindenden Rohres mit einem Bohrloch miteinander kombinierbar. Somit kann auf unterschiedliche Rohrdurchmesser, unterschiedliche Rohrabstände und unterschiedlicher Versatz der zu verbindenden Rohre vor Ort in einfacher und flexibler Weise reagiert werden.

Die Erfindung betrifft somit auch einen so genannten Kid, das heißt, einen Satz verschiedener der zuvor erläuterten Verbindungselemente 12, 14 bzw. Zwischenringe 54.

### Bezugszeichen

- 10: Rohradapter
- 12: erstes Verbindungselement
- 14: zweites Verbindungselement
- 16: Verbindungsabschnitt
- 18: Verbindungsabschnitt
- 20: Kupplungsabschnitt
- 20`: Kupplungsabschnitt
- 22: Kupplungsabschnitt
- 22`: Kupplungsabschnitt
- 24: Dichtelement
- 26: Kupplungselement
- 28: Kupplungselement
- 30: Freiraum
- 32: Ringkragen
- 34: Schulter
- 36: Freiraum
- 38: Führungsabschnitt
- 40: Führungsfläche
- 42: Rastnase
- 44: Dichtring
- 46: Muffe
- 48: Dichtelement
- 50: Längsachse
- 52: Längsachse
- 54: Zwischenring
- 56: Verbindungsebene
- 58: Durchgangsöffnung
- 60: Innengewinde
- 62: Abschlussplatte
- 64: Befestigungslaschen
- 66: Durchgangsöffnung
- 68: Verschlusselement

## Patentansprüche

1. Rohradapter (10) zum Verbinden von zwei Rohrenden, der ein erstes Verbindungselement (12), das mit einem ersten Rohrende eines ersten Rohres und ein zweites Verbindungselement (14), das mit einem zweiten Rohrende eines zweiten Rohres verbindbar ist, umfasst, **dadurch gekennzeichnet, dass** die Verbindungselemente (12, 14) jeweils einen Verbindungsabschnitt (16, 18) zum Verbinden mit dem jeweiligen Rohrende und jeweils einen Kupplungsabschnitt (20, 22) zum Verbinden der Verbindungselemente (12, 14) untereinander umfassen.

2. Rohradapter (10) nach Anspruch 1, **dadurch gekennzeichnet, dass** die Kupplungsabschnitte (20, 22) Kupplungselemente (26, 28) zum kraft- und/oder formschlüssigen Verbinden der Verbindungselemente (12, 14) untereinander aufweisen.

3. Rohradapter (10) nach Anspruch 2, **dadurch gekennzeichnet, dass** die Kupplungselemente (26, 28) nach Art eines Bajonettverschlusses ausgebildet sind.

4. Rohradapter (10) nach einem der vorhergehenden Ansprüche, **dadurch gekennzeichnet, dass** die Verbindungselemente (12, 14) Verbindungsabschnitte (16, 18) mit unterschiedlichen Durchmessern zum Verbinden von Rohren mit unterschiedlichen Durchmessern aufweisen.

5. Rohradapter (10 nach einem der vorhergehenden Ansprüche, **dadurch gekennzeichnet, dass** die Längsachsen (50, 52) der Verbindungselemente (12, 14) mit einem Abstand (a) exzentrisch zueinander angeordnet sind.

6. Rohradapter (10) nach einem der vorhergehenden Ansprüche, **dadurch gekennzeichnet, dass** den Verbindungselementen (12, 14) erste, den Verbindungsabschnitten (16, 18) zugeordnete Dichtelemente (24) und/oder zweite, den Kupplungsabschnitten (20, 22) zugeordneten Dichtelemente (44) zuordnet sind.

7. Rohradapter (10) nach einem der vorhergehenden Ansprüche, **dadurch gekennzeichnet, dass** der Rohradapter (10) wenigstens einen Zwischenring (54) umfasst, der erste Kupplungselemente (26) zum Verbinden mit dem ersten Verbindungselement (12) und zweite Kupplungselemente (28) zum Verbinden mit dem zweiten Verbindungselement (14) aufweist.

8. Rohradapter (10) nach Anspruch 7, **dadurch gekennzeichnet, dass** der Zwischenring (54) eine Verbindungsebene (56) besitzt, von der sich Kupplungsabschnitte (20`, 22`) erstrecken und die Verbindungsebene (56) eine Durchgangsöffnung (58) besitzt.

9. Rohradapter (10) nach einem der vorhergehenden Ansprüche, **dadurch gekennzeichnet, dass** das erste Verbindungselement (12) und das zweite Verbindungselement (14), zumindest im Bereich der Kupplungsabschnitte (20, 22), konstruktionsgleich sind.

10. Rohradapter (10) nach einem der vorhergehenden Ansprüche, **dadurch gekennzeichnet, dass** den Verbindungselementen (12, 14) wenigstens ein Sicherungselement (68) zugeordnet ist.
